# EUROPÄISCHE PATENTSCHRIFT

(11) **EP 0 946 098 B1**
(45) Veröffentlichungstag und Bekanntmachung des Hinweises auf die Patenterteilung: **16.08.2001**
(21) Anmeldenummer: 97952901.3
(22) Anmeldetag: 09.12.1997
(51) Int. Cl.: A01N 43/80

(54) **VERWENDUNG VON AMINOISOTHIAZOLEN ALS MIKROBIZIDE**
USE OF AMINOISOTHIAZOLES AS MICROBICIDES
UTILISATION D'AMINO-ISOTHIAZOLES COMME MICROBICIDES

(30) Priorität: 23.12.1996 DE 19654147
(43) Veröffentlichungstag der Anmeldung: 06.10.1999
(73) Patentinhaber: BASF AKTIENGESELLSCHAFT, 67056 Ludwigshafen (DE)
(72) Erfinder: REUTHER, Wolfgang, D-69118 Heidelberg (DE); SPEAKMAN, John-Bryan, D-67273 Bobenheim (DE); ZELLER, Dieter, D-69168 Wiesloch (DE)
(86) Internationale Anmeldenummer: EP9706854
(87) Internationale Veröffentlichungsnummer: WO9827816

(56) Entgegenhaltungen:
- EP-A- 0 640 597
- US-A- 4 032 322
- US-A- 4 396 413
- VICENTINI C B ET AL: "FUNGITOXICITY OF 5-AMINOISOXAZOLE-4-THIOCYANATE DERIVATIVES" PESTICIDE SCIENCE, Bd. 34, Nr. 2, 1.Januar 1992, Seiten 127-131, XP000287973
- ALBERT, ANTHONY H. ET AL: "The synthesis of some 4-nitroisothiazoles as potential antifungal agents" JOURNAL OF HETEROCYCLIC CHEMISTRY., Bd. 17, Nr. 2, März 1980, PROVO US, Seiten 385-7, XP002063894
- LEONARD KUCZYNSKI ET AL. : "Synthesis of new 4 and 5 disubstituted isothiazoles" POLISH JOURNAL OF PHARMACOLOGY, Bd. 36, Nr. 5, 1984, Seiten 485-91, XP002064390 in der Anmeldung erwähnt

## Beschreibung

Die vorliegende Erfindung betrifft die Verwendung von Aminoisothiazolen als Mikrobizide zum Schützen technischer Materialien gegen Befall und Zerstörung durch Mikroorganismen. Weiterhin betrifft die Erfindung ein Verfahren zum Schutz technischer Materialien gegen Befall und Zerstörung durch Mikroorganismen.

Mikrobicide Eigenschaften von Isothiazolen (US 3,761,488, US 4,105,431, US 4,252,694, US 4,265,899, US 4,279,762, US 5,430,046, EP-A 697 409) und Benzothiophenderivaten i (DE-A 44 11 912), sowie von Mischungen einzelner Azolderivate mit Ammoniumverbindungen (EP-A 533 016), sind bekannt. Die Herstellung dieser Verbindungen ist zum Teil sehr aufwendig und ihre Wirkung ist, insbesondere bei niedrigen Aufwandmengen, nicht immer zufriedenstellend.

5-Aminoisothiazole sind als Kupplungskomponenten in Azofarbstoffen (EP-A 362 708, EP-A 315 898) bereits beschrieben. Für (oftmals N-acylierte) 5-Aminoisothiazole ist herbizide (EP-A 640 597, DE-A 24 34 922, DE-A 22 49 162, FR 2132691, US 4,032,321, US 4,032,322, ZA 7202352), bakterizide und viruzide Aktivität (L. Kuczynski et. al., Pol. J. Pharmacol. Pharm. (1984), 36(5), 485-491), sowie deren Eignung als Zwischenprodukte für Pharmaka und Pflanzenschutzmittel ebenfalls bekannt.

US 4,396,413 offenbart neue Metallsalze bekannter 4-Isothiazolon-Mikrobizide für den Materialschutz.
Aus Pesticide Science 34(2), 127-31 (1992) ist bekannt, daß Isoxazol- und Pyrazol-Analoge der hier beschriebenen Isothiazole, wie z.B: das 5-Amino-3-methyl-4-thiocyanato-isoxazol, wirksam gegen phytopathogene und dermatophytische Pilze sind. In Journal of Heterocyclic Chemistry 17(2), 385-7 (1980) sind 5-Chloro- und 5-Bromo- 3-methyl-4-nitro-isothiazol als antifungale Wirkstoffe beschrieben.

Die Aufgabe der Erfindung bestand darin, Verbindungen bereitzustellen, die als Mikrobizide im Materialschutz verwendbar und leicht zugänglich sind und eine gute mikrobizide Wirksamkeit aufweisen.

Demgemäß wurde gefunden, daß sich die 5-Aminoisothiazole der Formel I, 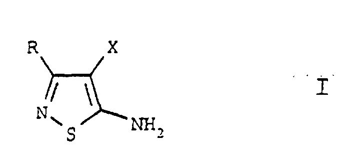 in der
- R: für Wasserstoff oder C₁-C₄-Alkyl und
- X: für Halogen, NO₂, CN und SCN stehen,
sowie deren Metallkomplexe und Säureadditionssalze, sehr gut als Mikrobizide im Materialschutz verwenden lassen. Dabei sind die Verbindungen bevorzugt, in denen
- 5 R: für C₁-C₄-Alkyl, insbesondere Methyl stehen.

Weiterhin sind Verbindungen bevorzugt, in denen
- X: für CN und insbesondere SCN stehen.

In einer besonders bevorzugten Ausführungsform verwendet man 3-Methyl-4-rhodano-5-aminoisothiazol (Formel Ic), 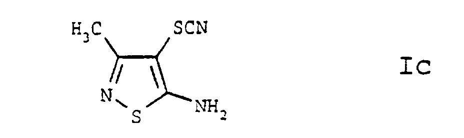 sowie dessen Metallkomplexe und Säureadditionssalze.

Die für die erfindungsgemäße Verwendung geeigneten Verbindungen I, werden mit einer an sich aus EP-A-640 597 bekannten Reaktionsfolge erhalten, in dem man Isothiazole der allgemeinen Formel II, 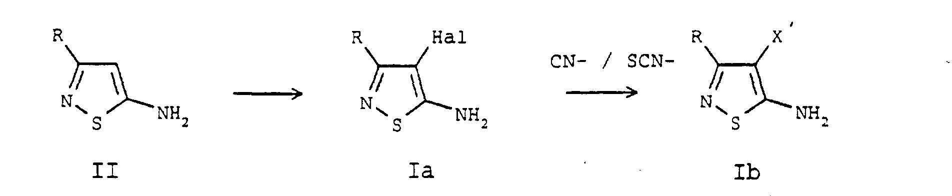 mittels eines Halogenierungsmittels in die Halogenverbindung Ia, wobei Hal für F, Cl, Br, oder J steht, übergeführt, die bedarfsweise dann durch Umsetzung mit Rhodaniden oder Cyaniden in die Verbindung Ib, wobei X' für SCN oder CN steht, umgewandelt wird. Die Herstellung von Isothiazolen der allgemeinen Formel II ist beispielsweise in DE-OS 17 70 819 beschrieben. Die Herstellung von 3-Methyl-5-aminoisothiazol wurde von A. Adams et. al. in J. Chem. Soc. 1959, S. 3061 beschrieben.

Die Aminoisothiazole I sind per se oder in formulierter Form zum Schutz von technischen Materialien gegen Befall und Zerstörung durch Mikroorganismen geeignet.

Unter technischen Materialien sind nichtlebende Materialien zu verstehen, wie sie in technischen und industriellen Prozessen anfallen oder für eine Verwendung in der Technik vorgesehen sind. Beispielsweise können technische Materialien, die durch die Wirkstoffe I vor mikrobieller Veränderung oder Zerstörung geschützt werden sollen, Dispersionen, Klebstoffe, Leime, Kosmetika, Stärkelösungen, Wachs- und Tonemulsionen, Papier, Schlichten, Appreturen, Spinnbäder, Textilien, Leder, Rohhäute, Gelatinezubereitungen, Fensterkitt, Fugendichtungsmassen, Holz, Anstrichmittel, Kunststoffartikel, Kühlschmierstoffe, Bohröle und andere Materialien sein, die von Mikroorganismen befallen oder zersetzt werden können. Weiterhin sind die Verbindungen als Schleimbekämpfungsmittel in der Papierindustrie, in Rückkühlwerken und Luftbefeuchtungsanlagen geeignet. Besonders bevorzugt werden die Aminoisothiazole I in Dispersionen, wie Kunststoffdispersionen und Anstrichmittel eingesetzt.

Als Mikroorganismen, die einen Abbau oder eine Veränderung der technischen Materialien bewirken können, seien beispielsweise Sporen, Viren, Bakterien, Pilze, Hefen, Algen und Schleimorganismen genannt. Vorzugsweise wirken die erfindungsgemäßen Wirkstoffe; bzw. Zubereitungen gegen Pilze, Bakterien und Algen.

Mikroorganismen der folgenden Arten seien beispielsweise genannt:

Alternaria alternata, Alternaria tenuis, Aspergillus niger, Aureobasidium pullulans, Candida albicans, Chaetomium globosum, Citrobacter freundii, Cladosporium resinae, Coniophora puteana, Desulfovibrio desulfuricans, Escherichia coli, Klebsiella pneumoniae, Lentinus tigrinus, Penicillium expansum, Penicillium funiculosum, Penicillium glaucum, Polyporus versicolor, Proteus mirabilis, Proteus vulgaris, Pseudomonas aeruginosa, Sclerophoma pityophila, Saccharomyces cerevisiae, Staphylococcus aureus, Streptoverticillium rubrireticuli, Trichoderma viride.

Die Wirkstoffe der Formel I können in Abhängigkeit ihrer physikalischen und chemischen Eigenschaften, sowie der gewünschten Anwendung, in übliche Formulierungen übergeführt werden, wie z. B. Lösungen, Emulsionen, Pulver, Pasten oder Dispersionen.

Diese Wirkstoffformulierungen werden in an sich bekannter Weise hergestellt, z. B. durch Vermischen der Wirkstoffe mit geeigneten Streckmitteln oder Lösungsmitteln, gegebenenfalls unter Verwendung von oberflächenaktiven Mitteln, also Emulgier- oder Dispergiermitteln. Bei Verwendung von Wasser wird man im allgemeinen organische Lösungsmittel als Hilfslösemittel verwenden. Als Lösungsmittel kommen beispielsweise in Frage: Alkohole, wie z. B. Methanol, Ethanol, Propanol, Butanol, Cyclohexanol oder Glycole, wie z. B. Propylenglycol, 2-Phenoxyethanol, Phenoxypropanol, oder aliphatische, cyclische und aromatische Kohlenwasserstoffe, wie z. B. Toluol, Xylol, Mesitylen, Paraffin, Tetrahydronaphthalin, alkylierte Naphthaline oder deren Derivate, Chlorbenzol, Dichlorbenzol oder stark polare Lösungsmittel, wie z. B. N,N-Dimethylformamid, N,N-Dimethylacetamid, Dimethylsulfoxid oder N-Methylpyrrolidon.

Als Emulgiermittel kommen beispielsweise in Frage: Alkali-, Erdalkali- oder Ammoniumsalze von aromatischen Sulfonsäuren, z. B. Lignin-, Phenol-, Naphthalin- und Dibucylnaphthalinsulfonsäure, sowie von Fettsäuren, Alkyl- und Arylsulfonaten, Alkyl-, Laurylether- und Fettalkoholsulfaten, sowie Salze sulfatierter Hexa-, Hepta- und Octadecanolen, sowie Kondensationsprodukte von sulfoniertem Naphthalin oder seiner Derivate mit Formaldehyd, Kondensationsprodukte des Naphthalins, bzw. der Naphthalinsulfonsäuren mit Phenol und Formaldehyd, Polyoxethylenfettalkoholether, Polyoxethylenoctylphenolether, ethoxyliertes Isooctyl-, Octyl- oder Nonylphenol, Alkylphenol-, Tributylphenylpolyglycolether, Isotridecylalkohol, Alkylarylpolyglycolether, ethoxyliertes Rizinusöl, Polyoxyethylenalkylether oder Polyoxypropylen, Laurylalkoholpoyglycoletheracetat, Sorbitester; als Dispergiermittel kommen beispielsweise in Frage: Lignin-Sulfitablaugen und Methylcellulose.

Aliphatische Carbonsäuren können zur Verbesserung der Homogenität der Konzentrate zugesetzt werden. Solche Säuren sind z.B. Propionsäure, Hexansäure, Heptansäure, verzweigte Carbonsäuren wie z.B. 2-Ethylenhexansäure, Isooctansäure, Neocarbonsäuren, aliphatische Dicarbonsäuren wie z.B. Sebacinsäure, Cycloalkylcarbonsäuren wie z.B. Cyclohexansäure, Arylcarbonsäuren wie z.B. Benzoesäure, 3- oder 4-Hydroxybenzoesäure.

Als Anstrichmittel, bzw. Vorprodukte zur Herstellung von Anstrichmitteln seien genannt: Kunststoffdispersionen, Dispersionsfarben für die Anstrichindustrie, Stärkelösungen, Aufschlämmungen anderer Rohstoffe, wie Farbpigmente oder Farbstoffe oder Aufschlämmungen von Füllstoffen, wie Kaolin, Calciumkarbonat, Kieselsäuren, Kieselgele, Silikate, Talkum, Kalkstein, Kalk, Kreide, Bolus, Löß, Ton, Dolomit, Diatomeenerde, Calcium- und Magnesiumsulfat, Magnesiumoxid oder gemahlene Kunststoffe.

Die Wirksamkeit und das Wirkungsspektrum der Wirkstoffe der Formel I, bzw. der daraus herstellbaren Mittel, Vorprodukte oder Formulierungen kann erhöht werden, wenn weitere, gegebenenfalls antimikrobiell wirksame Verbindungen, Bakterizide, Fungizide, Herbizide, Insektizide oder andere Wirkstoffe zur Verbreiterung des Wirkungsspektrums oder Erzielung besonderer Effekte zugesetzt werden. In vielen Fällen erhält man dabei synergistische Effekte, d. h. das Wirkungsspektrum der Mischung übertrifft die Wirkung der Einzelkomponenten.

Besonders günstige Mischungspartner sind beispielsweise folgende:

### Mikrobizide:

2-(Thiocyanomethylthio)-benzthiazol, 1-[2-(2,4-Dichlorphenyl)-2(2-propenyl-oxy)-ethyl]-1H-imidazol, 2,4,5,6-Tetrachlorisophthalodinitril, Methylenbisthiocyanat, Tributylzinnoxid, -naphthenat, -benzoat, -salicylat, Mercaptobenzthiazol, 1,2-Benzisothiazolon und seine Alkalisalze, Alkaliverbindungen des N'-Hydroxy-N-cyclohexyl-diazeniumoxids, 2-(Methoxy-carbonylamino)-benzimidazol, 2-Methyl-3-oxo-5-chlor-thiazolin-3-on, Trihydroxymethyl-nitro-methan, Glutaraldehyd, Chloracetamid, Polyhexamethylenbisguanide, 5-Chlor-2-methyl-4-isothiazolin-3-on + Magnesiumsalze, 2-Methyl-4-isothiazolin-3-on, 3,5-Dimethyltetrahydro-1,3,4-2H-thiadiazin-2-thion, Hexahydrotriazin, N,N-Methylolchloracetamid, 2-n-Octyl-4-isothiazol-in-3-on, Oxazolidine, Bisoxazolidine, 5-Dihydro-2,5-dialkoxy-2,5-dialkylfurane, Diethyl-dodecyl-benzyl-ammoniumchlorid, Dimethyl-octadecyl-dimethylbenzyl-ammoniumchlorid, Dimethyl-didecyl-ammoniumchlorid, Dimethyl-didodecyl-ammoniumchlorid, Trimethyl-tetradecylammoniumchlorid, Benzyl-dimethyl-alkyl-(C₁₂-C₁₈)-ammoniumchlorid, i Dichlorbenzyl - dimethyl - dodecyl - ammoniumchlorid, Cetylpyridiniumchlorid, Cetylpyridiniumbromid, Cetyl-trimethyl-ammoniumchlorid, Laurylpyridiniumchlorid, Laurylpyridiniumbisulfat, Benzyldodecyl-di(beta-oxyethyl)-ammoniumchlorid, Dodecylbenzyl-trimethyl-ammoniumchlorid, n-Alkyl-dimethyl-benzyl-ammoniumchlorid (Alkylrest: 40 % C₁₂, 50 % C₁₄, 10 % C₁₆), Lauryl-dimethyl-ethylammoniumethylsulfat, n-Alkyl-dimethyl-(1-naphthylmethyl)-ammoniumchlorid (Alkylrest: 98 % C₁₂, 2 % C₁₄), Cetyldimethylbenzylammoniumchlorid, Lauryldimethylbenzylammoniumchlorid,

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen,

### Fungizide:

Schwefel, Dithiocarbamate und deren Derivate wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylen-bis-dithiocarbamat), N,N'-Polypropylen-bis-(thiocarbamoyl)disulfid;

Nitroderivate wie Dinitro-(1-methylheptyl)phenylcrotonat, 2-sec.-Butyl-4,6-dinitrophenyl-3,3-dimethylacrylat, 2-sec.-Butyl-4,6-dinitrophenyl-iso-propylcarbonat, 5-Nitro-iso-phthalsäure-di-isopropylester;

heterocyclische Substanzen wie 2-Heptadecyl-2-imidazolin-acetat, 2,4-Dichlor-6-(o-chloranilino)-s-triazin, O,O-Diethyl-phthalimidophosphonothioat, 5-Amino-1-[bis-(dimethylamino)phosphinyl]-3-phenyl-1,2,4-triazol, 2,3-Dicyano-1,4-dithioanthrachinon, 2-Thio-1,3-dithiolo-[4,5-b]-chinoxalin, 1-(Butylcarbamoyl)-2-benzimidazol-carbaminsäuremethylester, 2-Methoxycarbonylamino-benzimidazol, 2-(Furyl-(2))benzimidazol, 2-(Thiazolyl-(4))benzimidazol, N-(1,1,2,2-Tetrachlorethylthio)tetrahydrophthalimid, N-Trichlormethylthio-tetrahydrophthalimid, N-Trichlor-methylthio-phthalimid,

N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlori phenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxachiin, 2, 3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäure-anilid, 2-Iod-benzoesäure-anilid, N-Formyl-N-morpholin-2,2,2-trichlor-ethylacetal, Piperazin-1,4-diylbis-(1-(2,2,2-trichlor-ethyl)formamid, 1-(3,4-Dichloranilino)-1-formylamino-2,2,2-trichlorethan, 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethylmorpholin, N-[3-(p-tert. -Butylphenyl)-2-methylpropyl)-piperidin, 1-[2-(2,4-Dichlorphenyl)-4-ethyl- 1,3-dioxolan-2-yl-ethyl]-1H-1,2,4-triazol, 1-[2-(2,4-Dichlorphenyl)-4-n-propyl-1,3-dioxolan-2-yl-ethyl]-1H-1,2,4-triazol, N-(n-Propyl)-N-(2,4,6-trichlor-phenoxyethyl)-N'-imidazol-yl-harnstoff, 1-(4-Chlorphenoxy)-3,3-dimethyl-1-(1H-1,2,4-triazol-1-yl)-2-butanon, (2-Chlorphenyl)-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)benzol, 1,2-Bis-3-methoxycarbonyl-2-thioureido)benzol, [2-(4-Chlorphenyl)ethyl]-(1,1-dimethylethyl}-1H-1,2,4-triazol-1-ethanol, 1-[3-(2-Chlorphenyl)-l-(4-fluorphenyl)oxiran-2-yl-methyl]-1H-1,2,4-triazol, sowie 5 verschiedene Fungizide wie Dodecylguanidinacetat, 3-[3-(3,5-Dimethyl-2-oxycyclohexyl)-2-hydroxyethyl))glutarimid, Hexachlorbenzol, DL-Methyl-N-(2,6-dimethyl-phenyl)-N-furoyl(2)alaninat, DL-N-(2,6-Dimethyl-phenyl)-N-(2'-methoxyacetyl)alanin-methylester, N-(2,6-Dimethylphenyl)-N-chloracetyl-D,L-2-aminobutyrolacton, DL-N-(2,6-Dimethylphenyl)-N-(phenylacetyl)alaninmethylester, 5-Methyl-5-vinyl-3-(3,5-dichlorphenyl)-2,4-dioxo-1,3-oxazolidin. 3-[3,5-Dichlorphenyl(-5-methyl-5-methoxymethyl]-1,3-oxazolidin-2,4-dion, 3-(3,5-Dichlorhenyl)-1-iso-propylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, 1-[2-(2,4-Dichlorphenyl)pentyl]-1H-1,2,4-triazol, 2,4-Difluor-a-(1H-1,2,4-triazolyl-1-methyl)benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)methylsilyl)methyl)-1H-1,2,4-triazol.

Strobilurine wie Methyl-E-methoximino-[a-(o-tolyloxy)-o-tolyl]acetat, Methyl-E-2-{2-[6-(2-cyanophenoxy)pyrimidin-4-yloxy]-phenyl}-3-methoxyacrylat, Methyl-E-methoximino-[a-(2-phenoxyphenyl)]acetamid, Methyl-E-methoximino-[a-(2,5-dimethylphenoxy)-o-tolyl]acetamid.

Anilinopyrimidine wie N-(4,6-Dimethylpyrimidin-2-yl)anilin, N-[4-Methyl-6-(1-propinyl)pyrimidin-2-yl]anilin, N-(4-Methyl-6-cyclopropyl-pyrimidin-2-yl)anilin.

Phenylpyrrole wie 4-(2,2-difluor-1,3-benzodioxol-4-yl)pyrrol-3-carbonitril.

Zimtsäureamide wie 3-(4-Chlorphenyl)-3-(3,4-dimethoxyphenyl)acrylsäuremorpholid.

(2RS,3SR)-1-[3-(2-Chlorphenyl)-2-[4-fluorphenyl]oxiran-2-ylmethyl]-1H-1,2,4-triazol.

### Insektizide:

Abamectin, Acephat, Acrinathrin, Alanycarb, Aldicarb, Alphamethrin, Amitraz, Avermectin, Azadirachtin, Azinphos A, Azinphos M, Azocyclotin, Bacillus thuringiensis, Bendiocarb, Benfuracarb, Bensultap, Betacyluthrin, Bifenthrin, BPMC, Brofenprox, Bromophos A, Butencarb, Buprofezin, Butocarboxin, Butylpyridaben, Cadusafor, Carbaryl, Carbofuran, Carbophenothion, Carbosulfan, Cartap, Chloethocarb, Chlorethoxyfos, Chlorfenvinphos, Chlorfluazuron, Chlormephos, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cypromazin, Deltamethrin, Demeton M, Demeton S, Demeton-S-methyl, Diafenthiuron, Diazinon, Dichlofenthion, Dichlorvos, Dicliphos, Dicrotophos, Diethion, Diflubenzuron, Dimethoat, Dimethylvinphos, Dioxathion, Disulfoton, Edifenphos, Emamectin, Esfenvalerat, Ethiofencarb, Ethion, Ethofenprox, Ethoprophos, Etrimphos, Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Flucycloxuron, Flucythrinat, Flufenoxuron, Flufenprox, Fluvalinate, Fonophos, Formothion, Fosthiazat, Fubfenprox, Furathiocarb, HCH, Heptenophos, Hexaflumuron, Hexythiazox, Imidacloprid, Iprobenfos, Isazophos, Isofenphos, Isoprocarb, Isoxathion, Ivemectin, Lamda-cyhalothrin, Lufenuron, Malathion, Mecarbam, Mervinphos, Mesulfenphos, Metaldehyd, Methacrifos, Methamidophos, Methidathion, Methiocarb, Methomyl, Metolcarb, Milbemectin, Monocrotophos, Moxidectin, Naled, Nitenpyram, Omethoat, Oxamyl, Oxydemethon M, Oxydeprofos, Parathion A, Parathion M, Permethrin, Phenthoat, Phorat, Phosalon, Phosmet, Phosphamdon, Phoxim, Pirimicarb, Pirimiphos M, Primiphos A, Profenofos, Promecarb, Propaphos, Propoxur, Prothiofos, Prothiophos, Prothoat, Pymetrozin, Pyraclophos, Pyradaphenthion, Pyresmethrin, Pyrethrum, Pyridaben, Pyrimidifen, Pyriproxifen, Quinalphos, Salithion, Sebufos, Silafluofen, Sulfotep, Sulprofos,Tebufenozid, Tebufenpyrad, Tebupirimphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb, Vamidothion, XMC, Xylylcarb, Zetamethrin.

Weiterhin kommen als Mischungspartner Algizide, Molluskizide, Wirkstoffe gegen "sea animals", die sich z. B. auf Schiffsbodenanstrichen ansiedeln, in Betracht.

Beispiele für solche Zubereitungen sind:
1. Beispiele für Formulierungen in Dispersionsfarbe oder Kunststoffdispersion:
   a) 1000 Gew.-Teile einer Polymerdispersion auf Basis Polyacrylat werden vorgelegt und mit 0,25 Gew.-Teilen eines 20 gew.-%igen Suspensionskonzentrates von 3-Methyl-4-rhodano-5-aminoisothiazol in Propylencarbonat unter Rühren versetzt.
   b) Die Zugabe des pulverförmigen Wirkstoffes in die fertige Dispersion ist möglich.
   c) Eine Lösung aus 3 Gew.-% 3-Methyl-4-rhodano-5-aminoisothiazol in Propylenglycol, Dipropylenglycol, Phenoxyethanol, Phenoxypropanol oder Polyethylenglycol ist zum Einarbeiten in wässrige und lösungsmittelhaltige Kunststoffdispersionen geeignet.
   d) Eine Paste auf Basis Wasser oder Glycol, die 20 bis 50 Gew.-% 3-Methyl-4-rhodano-5-aminoisothiazol enthält, ist zum Einarbeiten in wässrige und lösungsmittelhaltige Kunststoffdispersionen geeignet.
   e) Eine Lösung aus 90 Gew.-Teilen 3-Methyl-4-rhodano-5-aminoisothiazol und 10 Gew.-Teilen N-Methylpyrrolidon ist zum Einarbeiten in wässrige und lösungsmittelhaltige Kunststoffdispersionen geeignet.
   f) Eine wäßrige Dispersion aus 20 Gew.-Teilen 3-Methyl-4-rhodano-5-aminoisothiazol, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 mol Ethylenoxid an 1 mol Ricinusöl. Die Mischung dieser Dispersion mit 100 000 Gew.-Teilen einer wässrigen Anstrichmittel-Dispersion enthält 0,02% des Wirkstoffs.
2. Eine Mischung aus 14 Gew.-Teilen Cu(OH)₂CuCO₃, 33 Gew.-Teilen Monoethanolamin, 22 Gew.-Teilen Benzoesäure, 11 Gew-Teilen Wasser, 4 Gew.-Teilen 3-Methyl-4-rhodano-5-aminoisothiazol, 10 Gew.-Teilen ethoxyliertes Nonylphenol und 6 Gew.-Teilen Propylenglycol ist besonders zur Imprägnierung von Holz geeignet.

Die zum Schutz der technischen Materialien verwendeten mikrobiziden Mittel oder Konzentrate enthalten den Wirkstoff, bzw. die Wirkstoffkombination in einer Konzentration von 0,01 bis 95, bevorzugt 0,1 bis 50 Gew.-%.

Die Anwendungskonzentration der zu verwendenden Wirkstoffe richtet sich nach Art und dem Vorkommen der zu bekämpfenden Mikroorganismen, sowie nach der Zusammensetzung des zu schützenden Materials. Im allgemeinen liegen die Anwendungskonzentrationen im Bereich von 0,001 bis 5 Gew.-%, vorzugsweise von 0,05 bis 1 Gew.-%, bezogen auf das zu schützende Material.

Die nachfolgenden Beispiele sollen die Erfindung verdeutlichen:

### Biologische Beispiele:

1. Mikrotiterplattentest - 1000, 500 und 250 ppm
Der Wirkstoff Ic wurde in Aceton gelöst. 100 µl einer Nährlösung wurde in die Vertiefungen von Mikrotiterplatten gegeben und Aliquots der Wirkstoffstammlösung dazu pipettiert, um die gewünschte Testkonzentration zu erreichen. Die Endkonzentration des Acetons betrug 10 %. Als Testmikroorganismen dienten (Bakterien) Citrobacter freundii, Escherchia coli, Proteus mirabilis, Pseidonomas aeruginosa uns Staphylococcus aureus (Hefearten) Candida albicans und Saccharomyces cerevisiae, sowie (Pilze) Alternaria alternata, Aspergillus niger und Penicillium funciculosum. Die inokulierten Platten wurden bei 23°C (Hefe- und Pilzarten) bzw. 30°C (Bakterien) inkubiert. Das Wachstum der Mikroorganismen wurde nach 2 (Bakteien), 3 (Hefen) bzw. 5 Tagen (Pilze) bewertet:

| Prüfkeim | Konzentration in ppm Aktivsubstanz (A.S.) | | |
|---|---|---|---|
| | 1000 | 500 | 250 |
| Citrobacter freundii | 0 | 0 | 5 |
| Escherchia coli | 0 | 0 | H |
| Proteus mirabilis | 0 | 0 | 0 |
| Pseidomonas Aeruginosa | 0 | 0 | 0 |
| Staphylococcus aureus | H | H | H |
| | | | |
| Candida albicans | 0 | 0 | H |
| Saccharamoyces cerevisiae | 0 | 0 | H |
| | | | |
| Alternaria alternate | 0 | 0 | 0 |
| Aspergillus niger | 0 | 0 | 0 |
| Penicillium funiculosum | 0 | 0 | 0 |
| | | | |
| Kontrolle | 5 | 5 | 5 |

0 = kein Wachstum
H = Wachstumshemmung
5 = ohne Wirkung, Wachstum wie in der Kontrolle

2. Konservierungsbelastungstest in einer Polymerdispersion auf Basis Polyacrylat
Vertiefte Prüfungen wurden in einer Polymerdispersion auf Basis Polyacrylat durchgeführt. der Wirkstoff Ic als acetonische Lösung wurde in den Konzentrationen 500, 250 und 100 ppm A.S. der Dispersion beigemischt. Anschließend wurden die Dispersionsansätze mit einem Mikroorganismengemisch angeimpft ("belastet"). Das Gemisch bestand aus den unter Punkt 1. erwähnten Mikroorganismen. Die Ansätze wurden bei 23°C inkubiert und alle 7 Tage erneut angeimpft. Nach 6 Zyklen wurde der Keimgehalt der Dispersion untersucht.
Festgestellt wurde, daß mit einer Anwendungskonzentration von 250 ppm A.S. die Polymerdispersion keimfrei gehalten werden konnte.

## Patentansprüche

1. Verwendung von Aminoisothiazolen der Formel I, 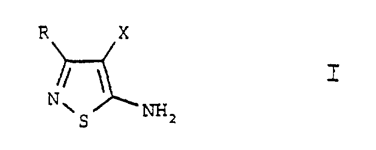 in der
R für Wasserstoff oder C₁-C₄-Alkyl und
X für Halogen, NO₂, CN und SCN stehen,
sowie deren Metallkomplexe und Säureadditionssalze, als Mikrobizide zum Schützen technischer Materialien gegen Befall und Zerstörung durch Mikroorganismen.

2. Verwendung nach Anspruch 1, dadurch gekennzeichnet, daß
R für C₁-C₄-Alkyl steht und
X für CN und SCN steht.

3. Verwendung nach Anspruch 1, dadurch gekennzeichnet, daß
R für Methyl steht.

4. Verwendung nach Anspruch 1, dadurch gekennzeichnet, daß X in Formel I die Rhodanogruppe bedeutet.

5. Verwendung nach Anspruch 1, dadurch gekennzeichnet, daß man 3-Methyl-4-rhodano-5-aminoisothiazol (Formel Ic) verwendet.

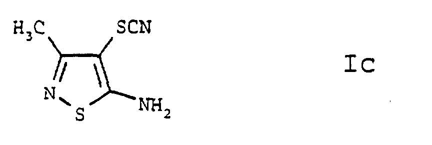

6. Verfahren zum Schutz technischer Materialien gegen Befall und Zerstörung durch Mikroorganismen, dadurch gekennzeichnet, daß man die technischen Materialien mit mikrobizid wirksamen Mengen an Aminoisothiazolen der Formel I gemäß Anspruch 1 behandelt.

7. Verfahren nach Anspruch 6, dadurch gekennzeichnet, daß man als Mikrobizid 3-Methyl-4-rhodano-5-aminoisothiazol der Formel Ic gemäß Anspruch 3 in mikrobizid wirksamen Mengen verwendet.

8. Verfahren zur Herstellung von mikrobiziden Mitteln, dadurch gekennzeichnet, daß man Aminoisothiazole der Formel I mit einem inerten Trägermaterial und ggf. oberflächenaktiven Stoffen vermischt.

## Claims

1. Use of aminoisothiazoles of the formula I 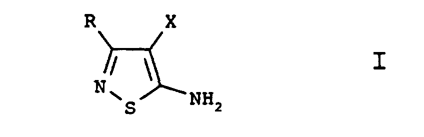 where
R is hydrogen or C₁-C₄-alkyl and
x is halogen, NO₂, CN or SCN,
and of metal complexes and acid addition salts thereof as microbicides for protecting industrial materials from being attacked and destroyed by microorganisms.

2. The use as claimed in claim 1, wherein
R is C₁-C₄-alkyl and
X is CN and SCN.

3. The use as claimed in claim 1, wherein
R is methyl.

4. The use as claimed in claim 1, wherein X in the formula I is thiocyanato.

5. The use as claimed in claim 1, wherein 3-methyl-4-thiocyanato-5-aminoisothiazole (formula Ic) is used.

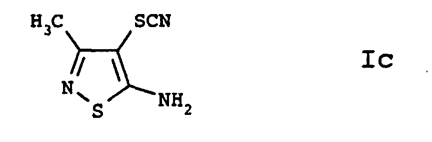

6. Method for protecting industrial materials from being attacked and destroyed by microorganisms, which comprises treating the industrial materials with microbicidally active amounts of aminoisothiazoles of the formula I as claimed in claim 1.

7. The method as claimed in claim 6, wherein the microbicide used is 3-methyl-4-thiocyanato-5-aminoisothiazole of the formula Ic as claimed in claim 3 in microbicidally active amounts.

8. A process for preparing microbicidal compositions, which comprises mixing aminoisothiazoles of the formula I with an inert carrier material and, if appropriate, surface-active compounds.

## Revendications

1. Utilisation d'aminoisothiazoles de formule I, 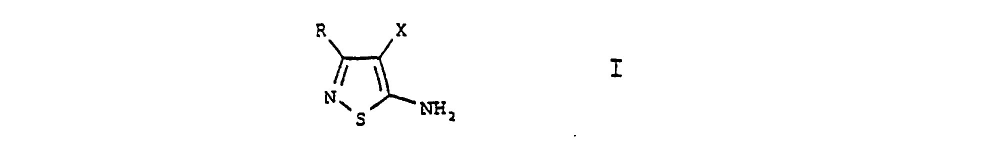 dans laquelle
R désigne l'hydrogène ou un alkyle en C₁-C₄ et
X représente un halogène, NO₂, CN et SCN,
ainsi que leurs complexes métalliques et leurs sels d'addition avec un acide,
comme microbicides pour la protection de matières techniques contre l'attaque et la destruction par des micro-organismes.

2. Utilisation selon la revendication 1, caractérisée par le fait que
R désigne un alkyle en C₁-C₄ et
X représente CN et SCN.

3. Utilisation selon la revendication 1, caractérisée par le fait que R désigne un méthyle.

4. Utilisation selon la revendication 1, caractérisée par le fait que X dans la formule I désigne le groupe rhodano.

5. Utilisation selon la revendication 1, caractérisée par le fait qu'on utilise du 3-méthyl-4-rhodano-5-aminoisothiazole (formule Ic).

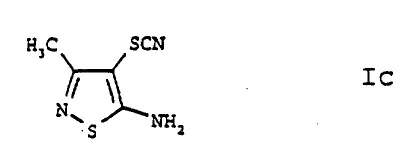

6. Procédé pour la protection de matières techniques contre l'attaque et la destruction par des micro-organismes, caractérisé par le fait qu'on traite les matières techniques avec des quantités efficaces du point de vue microbicide d'aminoisothiazoles de formule I selon la revendication 1.

7. Procédé selon la revendication 6, caractérisé par le fait qu'on utilise comme microbicide du 3-méthyl-4-rhodano-5-aminoisothiazole de formule Ic selon la revendication 3 en des quantités efficaces du point de vue microbicide.

8. Procédé pour la préparation d'agents microbicides, caractérisé par le fait qu'on mélange des aminoisothiazoles de formule I avec une matière support inerte et éventuellement des substances à activité de surface.
